(19) Europäisches Patentamt European Patent Office Office européen des brevets

(11) **EP 3 904 943 A1**

(12) **EUROPEAN PATENT APPLICATION**

(43) Date of publication:
**03.11.2021 Bulletin 2021/44**

(51) Int Cl.:
**G02B 26/08** (2006.01)  **G02B 26/10** (2006.01)

(21) Application number: **21169344.5**

(22) Date of filing: **20.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2020  JP 2020079234**

(71) Applicant: **Funai Electric Co., Ltd.
Daito,
Osaka, 574-0013 (JP)**

(72) Inventors:
• **HAMAOKA, Mika**
  **Osaka, 574-0013 (JP)**
• **FUJITA, Kenichi**
  **Osaka, 574-0013 (JP)**

(74) Representative: **Becker, Eberhard
Becker & Kurig Partnerschaft
Patentanwälte PartmbB
Bavariastrasse 7
80336 München (DE)**

(54) **LIGHT PROJECTION DEVICE AND LIGHT PROJECTION DEVICE FOR MOVING BODY**

(57)    A light projection device (100) includes: a light source (1) having plural light emission portions (10) arranged side by side in a predetermined direction; a projection lens (2); and an optical scanner having a mirror portion (3a) which scans light passed through the projection lens in a direction that the light emission portions are aligned, and a drive source (3b) swinging the mirror portion. The mirror portion scans a scanning light, which is irradiated from each light emission portion and scanned by the mirror portion, to form an intensity distribution having a central valley part (41) and peaks (42, 43) located on both sides of the valley part. The optical scanner scans the light irradiated from the light emission portions in a manner that at least a peak of an intensity distribution of scanning light of other light emission portion is located in the valley part of the intensity distribution.

FIG. 8

EP 3 904 943 A1

**Description**

BACKGROUND

Technical Field

The disclosure relates to a light projection device and a light projection device for moving body, and particularly relates to a light projection device and a light projection device for moving body which scan light by an optical scanner.

Related Art

Conventionally, a light projection device and a light projection device for moving body which scan light by an optical scanner are known (for example, see Patent literature 1, Japanese Patent Application Laid-Open No. 2019-167011).

The aforementioned Patent literature 1 discloses a headlight device for vehicle, which includes a light source, a scanning mirror, and a control portion.

A configuration is disclosed in which the headlight device for vehicle disclosed in Patent literature 1 irradiates light to the front of an automatic vehicle by scanning emission light of a light source by the scanning mirror. The configuration disclosed in Patent literature 1 scans the emission light from the light source by vibrating the scanning mirror at a predetermined deflection angle.

[Literature of related art]

[Patent literature]

[Patent literature 1] Japanese Patent Laid-Open No. 2019-167011

SUMMARY

Here, although not clearly described in Patent literature 1, when the light is scanned by the scanning mirror, the vibration direction of the mirror changes at an end portion of a scanning region, and thus there is a moment that a vibration speed of the mirror becomes 0 (zero). On the other hand, a vibration speed of the mirror is the fastest in a central part of a scanning range. Therefore, a difference in the intensity of the scanned light becomes large between both end parts and the central part in the region where the mirror scans the light. Therefore, for example, in the configuration disclosed in the Patent literature 1, there is a problem that the light having a large variation in light intensity is irradiated when the light irradiated from the light source is scanned by the scanning mirror.

The disclosure provides a light projection device and a light projection device for moving body capable of suppressing a variation in an intensity generated in projected light even when the light irradiated from a light source is scanned by a mirror portion.

A light projection device according to a first aspect of the disclosure includes: a light source having a plurality of light emission portions arranged side by side in a predetermined direction; a projection lens in which light is irradiated from the plurality of light emission portions; and an optical scanner having a mirror portion which scans light passed through the projection lens in a direction that the plurality of light emission portions is aligned, and a drive source which swings the mirror portion. The mirror portion scans a scanning light, which is irradiated from each of the plurality of light emission portions and scanned by the mirror portion, so as to form an intensity distribution having a central valley part and peaks located on two sides of the valley part. The optical scanner scans light irradiated from the plurality of light emission portions in a manner that at least the peak of the intensity distribution of the scanning light of other light emission portion is located in the valley part of the intensity distribution of the scanning light.

In the light projection device according to the first aspect of the disclosure, as described above, the optical scanner scans the light irradiated from the plurality of light emission portions in a manner that at least the peak of the intensity distribution of the scanning light of other light emission portion is located in the valley part of the intensity distribution of the scanning light. Thereby, even when a difference in the intensity of the scanned light becomes larger between both end parts and the central part in the scanning region by scanning the light irradiated from the light source by the mirror portion, because the peak of the intensity distribution of the scanning light of other light emission portion is located in the valley part of the intensity distribution of the scanning light, the difference in the intensity of the scanning light between the intensity of the light of the valley part and the intensity of the light of the peak can be reduced. As a result, even when the light irradiated from the light source is scanned by the mirror portion, the variation in the intensity generated in the projected light can be suppressed.

In the light projection device according to the first aspect, the optical scanner adjusts an angle range in which the mirror portion swings when the light irradiated from the plurality of light emission portions is scanned, in a manner that at least the peak of the intensity distribution of the scanning light of other light emission portion is located in the valley part of the intensity distribution of the scanning light. According to the configuration, by adjusting the angle range in which the mirror portion swings, the light can be scanned in a manner that the peak of the intensity distribution of other scanning light is located in the valley part of the intensity distribution of the scanning light. As a result, the variation in the intensity generated in the projected light can be easily suppressed.

In this case, the optical scanner adjusts the angle range in which the mirror portion swings when the light irradiated from the plurality of light emission portions is scanned, so as to form the intensity distribution in which a plurality of first peaks is located in a first valley part which is a valley part of the intensity distribution of the scanning light of a first light emission portion among the plurality of light emission portions, which is arranged at an end portion on one side, and a plurality of second peaks is located in a second valley part which is a valley part of the intensity distribution of the scanning light of a second light emission portion among the plurality of light emission portions, which is arranged at an end portion on the other side. According to the configuration, the intensity distribution is formed in which the plurality of first peaks is located in the first valley part and the plurality of second peaks is located in the second valley part, and thus the difference in the intensity of the scanning light between the peak and the valley part can be further reduced as compared with the intensity distribution in which one first peak is located in the first valley part and one second peak is located in the second valley part. As a result, the variation in the intensity generated in the projected light can be further suppressed.

In the configuration in which the angle range in which the mirror portion swings is adjusted in a manner that the plurality of first peaks is located in the first valley part and the plurality of second peaks is located in the second valley part, the optical scanner adjusts the angle range in which the mirror portion swings when the light irradiated from the plurality of light emission portions is scanned, so as to form the intensity distribution in which all the first peaks except the first peak of the first light emission portion and the first peak of the second light emission portion are located in the first valley part, and all the second peaks except the second peak of the first light emission portion and the second peak of the second light emission portion are located in the second valley part. According to the configuration, the number of the first peaks located in the first valley part and the number of the second peaks located in the second valley part can be increased. As a result, the difference in the intensity of the scanning light between the peak and the valley part can be reduced even further, and thus the variation in the intensity generated in the projected light can be suppressed even further.

In this case, the optical scanner adjusts the angle range in which the mirror portion swings when the light irradiated from the plurality of light emission portions is scanned, so as to form the intensity distribution in which the second peak of the first light emission portion is located closer to the second peak side of the second light emission portion than the first peak of the second light emission portion. According to the configuration, the light from the light emission portion can be scanned so as to form the intensity distribution in which all the first peaks are located in the first valley part and all the second peaks are located in the second valley part. As a result, the difference in the intensity of the scanning light between the peak and the valley part can be even further effectively reduced, and thus the variation in the intensity generated in the projected light can be even further effectively suppressed.

In the light projection device according to the first aspect, the optical scanner is configured in a manner that the scanning light is light which has the intensity distribution having the valley part and the peaks by adjusting the angle range in which the mirror portion swings without changing a light amount irradiated from the plurality of light emission portions from a maximum light amount. According to the configuration, the decrease of utilization efficiency of the light irradiated from each light emission portion can be suppressed as compared with, for example, the configuration in which the light amount irradiated from the plurality of light emission portions is adjusted in order to suppress the variation in the intensity distribution of the scanning light. As a result, the decrease of the utilization efficiency of the light irradiated from the plurality of light emission portions can be suppressed, and the variation in the intensity of the projected light can be suppressed.

In the light projection device according to the first aspect, the plurality of light emission portions is arranged at substantially equal intervals. According to the configuration, the light irradiated from each emission point is also scanned at substantially equal intervals, and thus the light can be scanned in a manner that the plurality of peaks is located at substantially equal intervals in the valley part. As a result, cancellation of the light intensity in the valley part and the plurality of peaks occurs at substantially equal intervals, and thus the variation in the intensity of the projected light can be more easily suppressed.

In the light projection device according to the first aspect, the plurality of light emission portions is arranged side by side in a scanning direction of the mirror portion and a direction orthogonal to the scanning direction. According to the configuration, the light emission portions are arranged in the scanning direction of the mirror portion and the direction orthogonal to the scanning direction, and thus the number of the light emission portions included in the light source can be increased, and the light amount of the scanning light can be easily increased.

In the light projection device according to the first aspect, the mirror portion is configured by a metal member having a flat plate shape, and the drive source generates a plate wave and swings the mirror portion by the generated plate wave to reciprocate and vibrate around an axis line of a predetermined swing axis. According to the configuration, because the mirror portion is swung by the plate wave, the size of the mirror portion can be increased as compared with, for example, a micro-electro-mechanical systems (MEMS) mirror. As a result, because the size of the mirror portion can be increased, the irradiation range of the scanning light can be easily widened.

A light projection device for a moving body according to a second aspect of the disclosure, which is mounted on the moving body and irradiates light to the front of the moving body, includes: a light source having a plurality of light emission portions arranged side by side in a predetermined direction; a projection lens in which light is irradiated from the plurality of light emission portions; an optical scanner having a mirror portion which scans light passed through the projection lens in a direction in which the plurality of light emission portions is aligned, and a drive source which swings the mirror portion; a detection portion detecting a region which shields light in a region in which the light scanned by the mirror portion is irradiated; a swing angle acquisition portion which acquires a swing angle of the mirror portion; and a control portion which controls formation of the region which shields light and a region which irradiates light by switching between a turn-on state and a turn-off state of a light emission portion among the plurality of light emission portions, which emits light scanned in the region which shields light, based on a detection result acquired by the detection portion and a swing angle of the mirror portion acquired by the swing angle acquisition portion. The mirror portion scans a scanning light, which is irradiated from each of the plurality of light emission portions and scanned by the mirror portion, so as to form an intensity distribution having a central valley part and peaks located on two sides of the valley part. The optical scanner scans light irradiated from the plurality of light emission portions in a manner that at least the peak of the intensity distribution of the scanning light of other light emission portion is located in the valley part of the intensity distribution of the scanning light.

The light projection device for moving body according to the second aspect of the disclosure includes, as described above, the control portion which controls the formation of the region which shields the light and the region which irradiates the light by switching between the turn-on state and the turn-off state of the light emission portion among the plurality of light emission portions, which emits the light scanned in the region which shields the light, and the optical scanner which scans the light irradiated from the plurality of light emission portions in a manner that at least the peak of the intensity distribution of the scanning light of other light emission portion is located in the valley part of the intensity distribution of the scanning light. Thereby, similar to the light projection device in the first aspect, the light projection device for moving body can be provided which can suppress the variation in the irradiation intensity generated in the projected light and scan the irradiation light to the desired region even when the light irradiated from the plurality of light emission portions is scanned by the mirror portion.

In the light projection device for moving body according to the second aspect, the optical scanner adjusts an angle range in which the mirror portion swings when the light irradiated from the plurality of light emission portions is scanned, in a manner that at least the peak of the intensity distribution of the scanning light of other light emission portion is located in the valley part of the intensity distribution of the scanning light. According to the configuration, similar to the light projection device in the first aspect, the variation in the intensity generated in the projected light can also be easily suppressed in the light projection device for moving body.

According to the disclosure, as described above, the light projection device and the light projection device for moving body can be provided which are capable of suppressing the variation in the intensity generated in the projected light even when the light irradiated from the light source is scanned by the mirror portion.

BRIEF DESCRIPTION OF THE DRAWINGS

FIG. 1 is a schematic diagram for illustrating a moving body on which a light projection device is mounted according to an embodiment.

FIG. 2 is a block diagram showing an overall configuration of the light projection device according to an embodiment.

FIG. 3 is a perspective view for illustrating a configuration of an optical scanner according to an embodiment.

FIG. 4 is a schematic diagram for illustrating a configuration in which the light projection device according to an embodiment scans light irradiated from light emission portions.

FIG. 5 is a graph for illustrating an intensity distribution of one scanning light when the mirror portion according to an embodiment is stopped.

FIG. 6 is a graph for illustrating an intensity distribution of the one scanning light when the mirror portion according to an embodiment is swinging.

FIG. 7 is a graph for illustrating an intensity distribution of the one scanning light when the mirror portion according to an embodiment swings at a swing angle larger than that in the example shown in FIG. 6.

FIG. 8 is a graph for illustrating an overlap of intensity distributions of a plurality of scanning lights which are scanned by the mirror portion according to an embodiment.

FIG. 9 is a graph for illustrating the intensity distributions of the plurality of scanning lights when the mirror portion according to an embodiment is stopped.

FIG. 10 is a graph for illustrating intensity distributions of a plurality of scanning lights when a mirror portion according to a comparative example is swinging.

FIG. 11 is a graph for illustrating the intensity distributions of the plurality of scanning lights when the mirror portion according to an embodiment is swinging.

FIG. 12 is a flowchart for illustrating processing in which a control portion according to the embodiment forms a region which irradiates light and a region which shields light.

FIG. 13 is a graph for illustrating an overlap of intensity distributions of a plurality of scanning lights, which are scanned by a mirror portion according to a first variation example.

FIG. 14 is a graph for illustrating the intensity distributions of the plurality of scanning lights when the mirror portion according to the first variation example is swinging.

FIG. 15 is a schematic diagram for illustrating a configuration of a light source according to a second variation example.

DESCRIPTION OF THE EMBODIMENTS

An embodiment of the disclosure is described below based on the drawings.

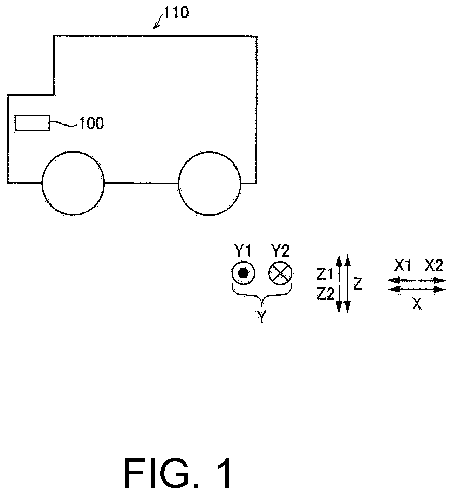

A configuration of a light projection device 100 according to an embodiment is described with reference to FIGS. 1 to 12.

(Moving body)

As shown in FIG. 1, the light projection device 100 according to the embodiment is mounted on a moving body 110. In addition, the light projection device 100 is configured to irradiate light to the front of the moving body 110. The moving body 110 includes, for example, an automobile. Moreover, in the specification, an up-and-down direction is set as a Z direction, an upward direction is set as a Z1 direction, and a downward direction is set as a Z2 direction. In addition, two directions orthogonal to each other in a surface orthogonal to the Z direction are respectively set as an X direction and a Y direction. Of the X direction, one side is set as an X1 direction, and the other side is set as an X2 direction. In addition, of the Y direction, one side is set as a Y1 direction, and the other side is set as a Y2 direction. In the example shown in FIG. 1, the front of the moving body 110 is in the X1 direction.

(Configuration of light projection device)

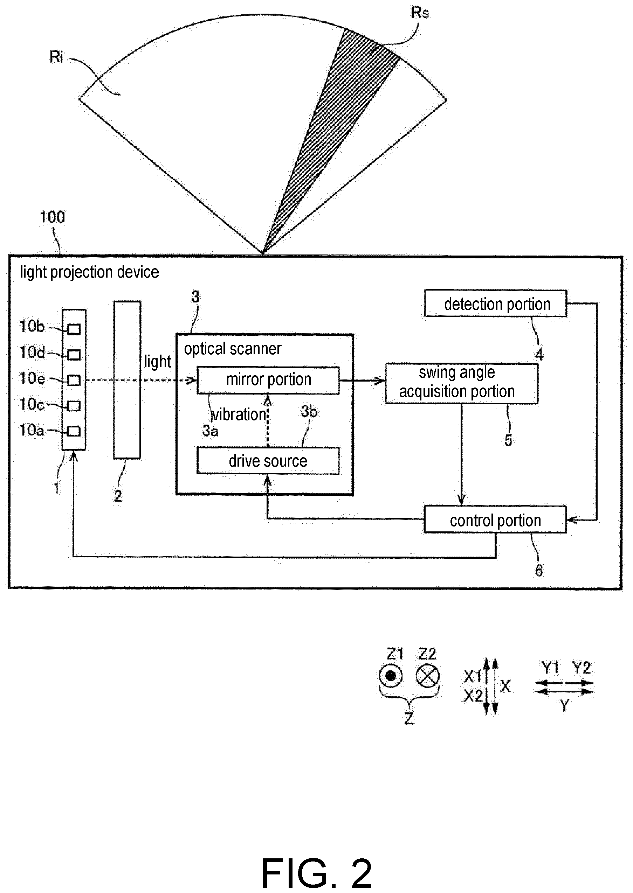

As shown in FIG. 2, the light projection device 100 according to the embodiment includes a light source 1, a projection lens 2, an optical scanner 3, a detection portion 4, a swing angle acquisition portion 5, and a control portion 6. The light projection device 100 is configured to irradiate the light toward an advancing direction (the X1 direction) of the moving body 110.

The light source 1 is configured to output the light. Specifically, the light source 1 has a plurality of light emission portions 10 arranged side by side in a predetermined direction. In the embodiment, the plurality of light emission portions 10 includes a first light emission portion 10a, a second light emission portion 10b, a third light emission portion 10c, a fourth light emission portion 10d, and a fifth light emission portion 10e. The light irradiated from the plurality of light emission portions 10 is irradiated to a mirror portion 3a included in the optical scanner 3 via the projection lens 2. The light source 1 includes, for example, a light emitting diode (LED), a laser diode (LD), or the like. In the embodiment, the light source 1 includes a LED.

The projection lens 2 is irradiated with the light from the plurality of light emission portions 10. The projection lens 2 focuses the light irradiated from the plurality of light emission portions 10 in the mirror portion 3a included in the optical scanner 3.

The optical scanner 3 includes the mirror portion 3a and a drive source 3b. The optical scanner 3 swings the mirror portion 3a by a plate wave generated by the drive source 3b and scans the light irradiated from the plurality of light emission portions 10. A detailed configuration of the light projection device 100 and a detailed configuration in which the light projection device 100 scans the light irradiated from the plurality of light emission portions 10 are described later.

The mirror portion 3a is configured to scan the light passed through the projection lens 2 in a direction in which the plurality of light emission portions 10 is aligned.

The drive source 3b is configured to swing the mirror portion 3a. The drive source 3b includes, for example, a piezoelectric element. The piezoelectric element includes, for example, lead zirconate titanate (PZT). The detail of the configuration in which the drive source 3b swings the mirror portion 3a is described later.

The detection portion 4 is configured to detect a region Rs, which shields the light, in a region Ri in which the light scanned by the mirror portion 3a is irradiated. The detection portion 4 includes, for example, an optical imaging device (an imaging camara), a laser sensor, an ultrasonic sensor, or the like.

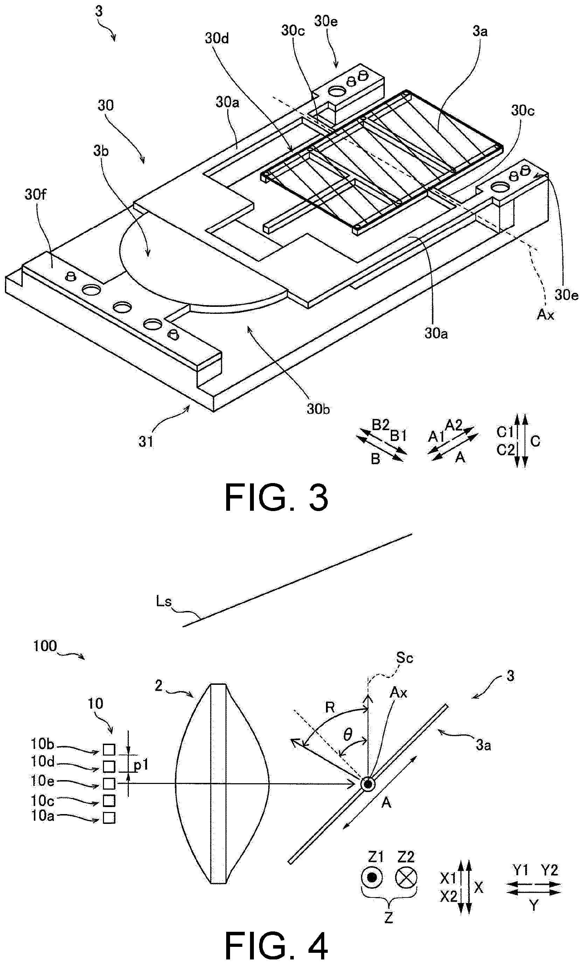

The swing angle acquisition portion 5 is configured to acquire a swing angle $\theta$ (see FIG. 4) of the mirror portion 3a. The swing angle acquisition portion 5 includes, for example, a magnetic angle sensor.

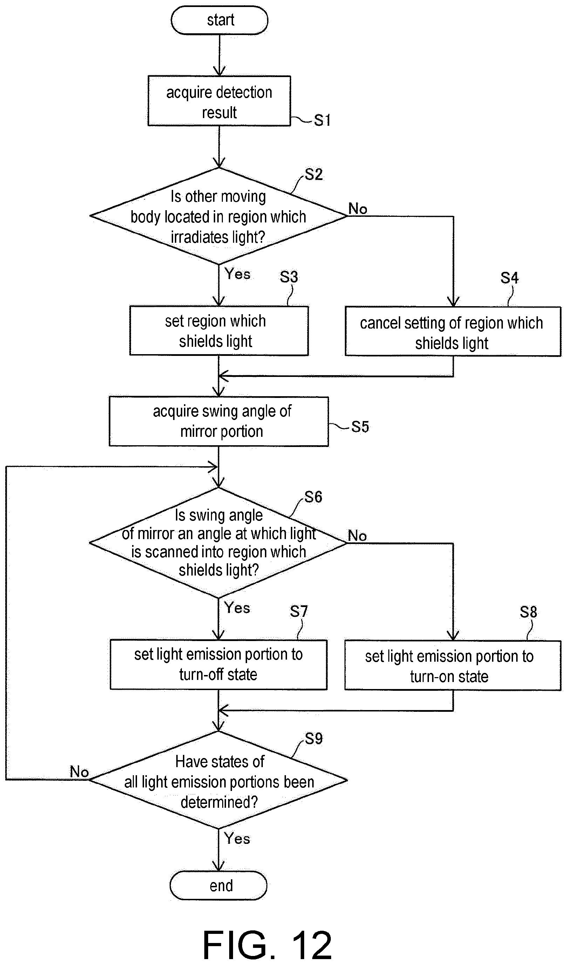

The control portion 6 is configured to control each portion of the light projection device 100. In addition, the control portion 6 is configured to control the irradiation of the light performed by the light source 1. In addition, the control portion 6 is configured to control the optical scanner 3. The control portion 6 is configured to form the region Ri (see FIG. 12) in which the light is irradiated and the region Rs (see FIG. 12) which shields the light. The control portion 6 includes a processor, for example, a central processing unit (CPU) or the like. The detail of the configuration is described later in which the control portion 6 forms the region Ri in which the light is irradiated and the region Rs which shields the light.

(Configuration of light projection device)

As shown in FIG. 3, the light projection device 100 includes the mirror portion 3a, the drive source 3b, a substrate 30, and a holding member 31. Moreover, in the example shown in FIG. 3, a direction orthogonal to a swing axis Ax of the substrate 30 is set as an A direction, one side of the A direction is set as an A1 direction, and the other side is set as an A2 direction. In addition, a direction in which the swing axis Ax extends is set as a B direction, one side of the B direction is set as a B1 direction, and the other side is set as a B2 direction. In addition, a direction orthogonal to an AB plane is set as a C direction, one side of the C direction is set as a C1 direction, and the other side is set as a C2 direction.

The mirror portion 3a is configured to reflect the light irradiated from the light source 1. The mirror portion 3a is constituted by a metal member having a flat plate shape. The mirror portion 3a is constituted by, for example, an aluminum material. In the embodiment, the mirror portion 3a is arranged separately from the substrate 30. Specifically, the mirror portion 3a is arranged in a mirror portion arrangement portion 30d. Moreover, in the example shown in FIG. 2, the mirror portion 3a is shown with hatching for convenience.

The substrate 30 includes a pair of beam portions 30a, a support portion 30b, and torsion portions 30c. In addition, the substrate 30 includes the mirror portion arrangement portion 30d in which the mirror portion 3a is arranged. The substrate 30 is constituted by, for example, a stainless-steel material having a flat plate shape.

Each of the pair of beam portions 30a is supported by the support portion 30b on the A1 direction side. In addition, in the example shown in FIG. 3, holding portions 30e are formed by increasing a width of end portions of the pair of beam portions 30a on the Y2 direction side in the X direction. In addition, the holding portions 30e are held by the holding member 31 by, for example, being screwed.

The support portion 30b is configured to support the end portion of each of the pair of beam portions 30a on the A1 direction. In addition, the drive source 3b is arranged in the support portion 30b. In addition, the support portion 30b has a holding portion 30f at the end portion on a side which does not support the pair of beam portions 30a in the A1 direction. The support portion 30b is held by the holding member 31 by, for example, being screwed.

The torsion portion 30c supports the mirror portion 3a to be swingable around the swing axis Ax. The torsion portion 30c extends in a direction (the B direction) which is orthogonal to an extending direction (the A direction) of the pair of beam portions 30a in a direction along a surface of the mirror portion 3a. In addition, the torsion portion 30c has a columnar shape. In addition, a pair of the torsion portions 30c is arranged. One of the pair of torsion portions 30c is connected to one of the pair of beam portions 30a, and the other torsion portion 30c is connected to the other beam portion 30a. In addition, each of the pair of torsion portions 30c is connected to the mirror portion arrangement portion 30d.

The mirror portion arrangement portion 30d is configured in a manner that the mirror portion 3a is arranged. In addition, the mirror portion arrangement portion 30d is connected to the pair of beam portions 30a via the torsion portions 30c. A detailed configuration of the mirror portion arrangement portion 30d is described later.

The drive source 3b is configured to generate the plate wave which swings the mirror portion 3a. The plate wave is a vibration in an XY plane direction, which is generated by expansion and contraction of the drive source 3b in the C direction. The drive source 3b swings the mirror portion 3a by the generated plate wave to reciprocate and vibrate around an axis line of the predetermined swing axis Ax. That is, the optical scanner 3 is an optical scanner of a resonance-driven type.

The holding member 31 is configured to hold the support portion 30b. As shown in FIG. 3, the holding member 31 holds the holding portion 30f. In addition, the holding member 31 is configured to hold each of the pair of beam portions 30a. As shown in FIG. 3, the holding member 31 is configured to hold the holding portion 30e in the pair of beam portions 30a.

As shown in FIG. 3, the substrate 30 has, for example, a U-shape. In addition, although not shown in FIG. 3, the holding member 31 also has, for example, a U-shape the same as the substrate 30.

(Scanning of light by optical scanner)

Next, the configuration in which the optical scanner 3 according to the embodiment scans the light irradiated from the light emission portion 10 is described with reference to FIGS. 4 to 11.

In the example shown in FIG. 4, the light, which is irradiated from the plurality of light emission portions 10 and passed through the projection lens 2, is scanned by the optical scanner 3 and irradiated to a light distribution observation surface Ls. The light distribution observation surface Ls is a virtual observation surface for observing an intensity distribution of the scanning light. The light distribution observation surface Ls is set at a position separated from the optical scanner 3 by a predetermined distance. The light distribution observation surface Ls is set at, for example, a position about 5 m away from the optical scanner 3.

As shown in FIG. 4, in the embodiment, the plurality of light emission portions 10 is arranged side by side in the predetermined direction. The predetermined direction is a direction in the surface (the XY plane) on which the mirror portion 3a scans the light. The plurality of light emission portions 10 may be arranged side by side in any direction as long as the light emission portions 10 are in a position facing the mirror portion 3a in the surface on which the mirror portion 3a scans the light. In the example shown in FIG. 4, the predetermined direction is the X direction. In addition, the plurality of light emission portions 10 is arranged at substantially equal intervals. In the example shown in FIG. 4, the plurality of light emission portions 10 is arranged at equal intervals in a manner that the arrangement interval between the two light emission portions 10 is a pitch p1.

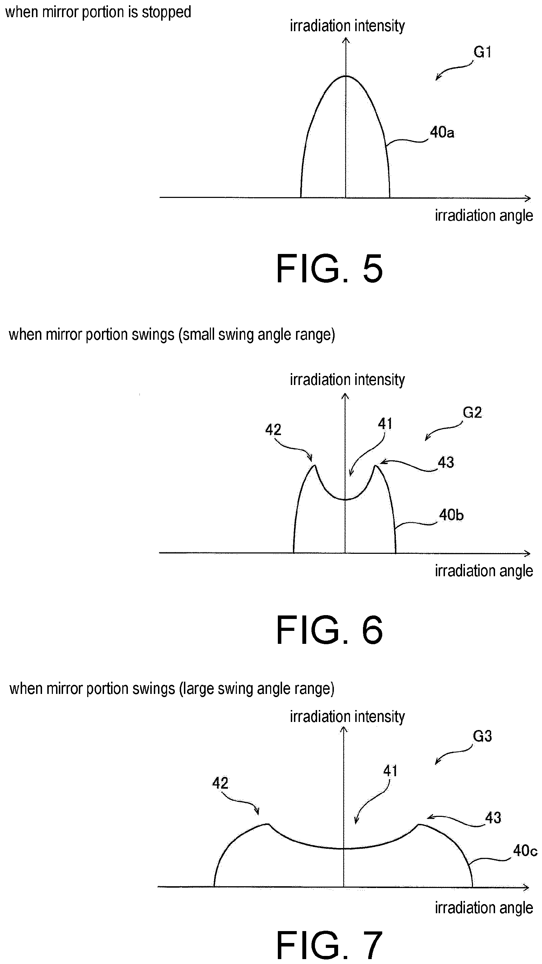

In the embodiment, the optical scanner 3 is configured in a manner that the scanning light is the light which has the intensity distribution having a valley part 41 (see FIG. 6) and peaks by adjusting an angle range R in which the mirror portion 3a swings without changing a light amount irradiated from the plurality of light emission portions 10 from the maximum light amount.

In addition, a swing angle $\theta$ of the mirror portion 3a means an angle of the mirror portion 3a from a swing center Sc of the mirror portion 3a at a predetermined timing when the mirror portion 3a swings in the angle range R. Moreover, the swing center Sc is the center of the angle range R in which the mirror portion 3a swings.

(Intensity distribution of scanning light)

Next, the change of the intensity distribution of the scanning light irradiated from the light emission portion 10 and scanned by the mirror portion 3a is described with reference to FIGS. 5 to 7.

A graph G1 shown in FIG. 5 is a graph of an intensity distribution 40a of a scanning light when the mirror portion 3a is stopped. In the graph G1, the horizontal axis is an irradiation angle, and the vertical axis is an irradiation intensity.

As shown in the graph G1, when the mirror portion 3a is stopped, the scanning light has the intensity distribution 40a having one peak.

A graph G2 shown in FIG. 6 is a graph of an intensity distribution 40b of a scanning light when the mirror portion 3a is swinging. In the graph G2, the horizontal axis is the irradiation angle, and the vertical axis is the irradiation intensity.

When the light is scanned by the mirror portion 3a, the vibration direction of the mirror portion 3a changes at the end portion of the scanning region, and thus there is a moment that a vibration speed of the mirror portion 3a becomes 0 (zero). On the other hand, a vibration speed of the mirror portion 3a is the fastest in the central part of the scanning range. Therefore, as shown in the graph G2, the intensity distribution 40b has a valley part 41 and a plurality of peaks. Specifically, the intensity distribution 40b has the valley part 41, a first peak 42, and a second peak 43. The first peak 42 and the second peak 43 are positions where a vibration amplitude is maximum when the mirror portion 3a vibrates.

In other words, the mirror portion 3a scans the scanning light, which is irradiated from each of the plurality of light emission portions 10 and scanned by the mirror portion 3a, so as to form the intensity distribution 40b which has the central valley part 41, and the first peak 42 and the second peak 43 which are located on both sides of the valley part 41.

A graph G3 shown in FIG. 7 is a graph of an intensity distribution 40c of a scanning light when the mirror portion 3a is swinging. In the graph G3, the horizontal axis is the irradiation angle, and the vertical axis is the irradiation intensity. The graph G3 is a graph showing the intensity distribution 40c of the scanning light when the angle range R in which the mirror portion 3a swings is larger than the angle range when the mirror portion 3a swings so as to form the intensity distribution 40b of the scanning light shown in the graph G2.

When the swing angle becomes larger, the scanning range of the light irradiated from the light emission portion 10 becomes wider. That is, the range of the irradiation angle becomes larger. However, because a light amount irradiated from the light emission portion 10 does not change, a maximum value of the irradiation intensity in the intensity distribution 40c is smaller than that in the intensity distribution 40b. That is, the irradiation angle of the light irradiated from the light emission portion 10 changes according to the vibration amplitude of the mirror portion 3a.

(Overlap of scanning light)

In the embodiment, the light source 1 has the plurality of light emission portions 10. In addition, in the embodiment, the mirror portion 3a scans each light in a manner that the light irradiated from each of the plurality of light emission portions 10 overlaps each other. Therefore, the light irradiated from the optical scanner 3 does not become light in which a dark line is formed in the irradiation region.

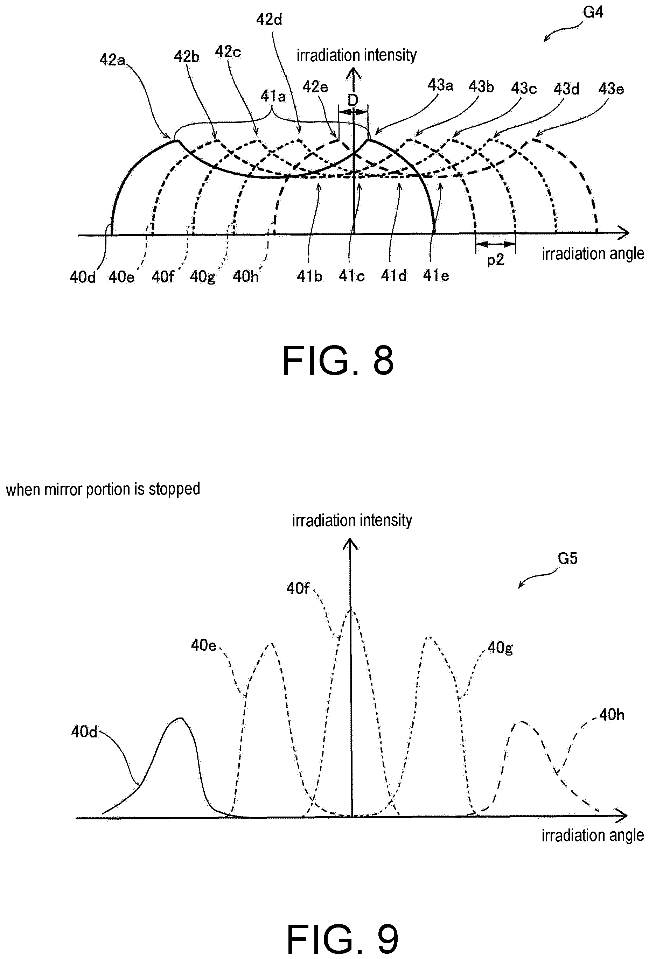

A graph G4 shown in FIG. 8 is a graph of the intensity distributions of the plurality of scanning lights when the mirror portion 3a is swinging. In the graph G4, the horizontal axis is the irradiation angle, and the vertical axis is the irradiation intensity.

An intensity distribution 40d in the graph G4 is an intensity distribution of a scanning light irradiated from the first light emission portion 10a (see FIG. 4). In addition, an intensity distribution 40e is an intensity distribution of a scanning light irradiated from the third light emission portion 10c (see FIG. 4). In addition, an intensity distribution 40f is an intensity distribution of a scanning light irradiated from the fourth light emission portion 10d (see FIG. 4). In addition, an intensity distribution 40g is an intensity distribution of a scanning light irradiated from the fifth light emission portion 10e (see FIG. 4). In addition, an intensity distribution 40h is an intensity distribution of a scanning light irradiated from the second light emission portion 10b (see FIG. 4). In addition, in the graph G4, for convenience, shapes of the intensity distributions of the light irradiated from each of the light emission portions 10 are shown in a matching manner.

Moreover, in the example shown in FIG. 8, each intensity distribution is shown by different types of lines. That is, the intensity distribution 40d of the scanning light irradiated from the first light emission portion 10a is shown by a solid line. In addition, the intensity distribution 40h of the scanning light irradiated from the second light emission portion 10b is shown by a broken line. In addition, the intensity distribution 40e of the scanning light irradiated from the third light emission portion 10c is shown by a broken line having an interval different from that of the intensity distribution 40h. In addition, the intensity distribution 40f of the scanning light irradiated from the fourth light emission portion 10d is shown by a one-dot line. In addition, the intensity distribution 40g of the scanning light irradiated from the fifth light emission portion 10e is shown by a two-dot chain line.

The intensity distribution 40d includes a first valley part 41a, a first peak 42a, and a second peak 43a. The intensity distribution 40e includes a valley part 41b, a first peak 42b, and a second peak 43b. The intensity distribution 40f includes a valley part 41c, a first peak 42c, and a second peak 43c. The intensity distribution 40g includes a valley part 41d, a first peak 42d, and a second peak 43d. The intensity distribution 40h includes a second valley part 41e, a first peak 42e, and a second peak 43e.

That is, the mirror portion 3a swings in the angle range R in a manner that the light irradiated from each light emission portion 10 has the intensity distribution including the valley part 41, the first peak 42, and the second peak 43.

In addition, in the embodiment, the plurality of light emission portions 10 is arranged in a manner of having substantially equal intervals at the pitch p1. Therefore, the intensity distributions 40d to 40h of each scanning light irradiated from each light emission portion 10 are also observed at substantially equal intervals on the light distribution observation surface Ls. For example, the intensity distributions 40d to 40h of each scanning light are observed at substantially equal intervals by an interval of a pitch p2.

In the embodiment, as shown in the graph G4, the optical scanner 3 scans the light irradiated from the plurality of light emission portions 10 in a manner that at least a peak of an intensity distribution of a scanning light of other light emission portion 10 is located in the valley part 41 of the intensity distribution of the scanning light.

Specifically, as shown in the graph G4, the optical scanner 3 adjusts the angle range R in which the mirror portion 3a swings when the light irradiated from the plurality of light emission portions 10 is scanned, in a manner that at least the peak of the intensity distribution of the scanning light of other light emission portion 10 is located in the valley part 41 of the intensity distribution of the scanning light.

In the embodiment, as shown in the graph G4, the optical scanner 3 adjusts the angle range R in which the mirror portion 3a swings when the light irradiated from the plurality of light emission portions 10 is scanned, so as to form the intensity distribution in which the plurality of first peaks 42 is located in the first valley part 41a which is the valley part 41 of the intensity distribution of the scanning light of the first light emission portion 10a among the plurality of light emission portions 10, which is arranged at an end portion on one side, and the plurality of second peaks 43 is located in the second valley part 41e which is the valley part 41 of the intensity distribution of the scanning light of the second light emission portion 10b among the plurality of light emission portions 10, which is arranged at an end portion on the other side.

Specifically, the optical scanner 3 adjusts the angle range R in which the mirror portion 3a swings when the light irradiated from the plurality of light emission portions 10 is scanned, so as to form the intensity distribution in which the second peak 43 of the first light emission portion 10a is located closer to the second peak 43 side of the second light emission portion 10b than the first peak 42 of the second light emission portion 10b.

In other words, the optical scanner 3 swings the mirror portion 3a so as to form the intensity distribution in which a distance D between the second peak 43a of the scanning light irradiated from the first light emission portion 10a and the first peak 42e of the scanning light irradiated from the second light emission portion 10b is smaller than the pitch p2 which is the interval of the intensity distribution of each scanning light.

(Irradiation light of light projection device)

Next, irradiation light irradiated from the light projection device 100 is described with reference to FIGS. 9 to 11.

A graph G5 shown in FIG. 9 shows the intensity distributions 40d to 40h of the scanning lights of the first light emission portion 10a to the fifth light emission portion 10e when the mirror portion 3a is stopped. In the graph G5, the horizontal axis is the irradiation range, and the vertical axis is the irradiation intensity.

An example shown in the graph G5 is the intensity distribution of the light after passing through the projection lens 2. The plurality of light emission portions 10 is arranged side by side in the X direction. Therefore, in the graph G5, the shape of each intensity distribution is different due to the difference in the position of the light emission portion 10.

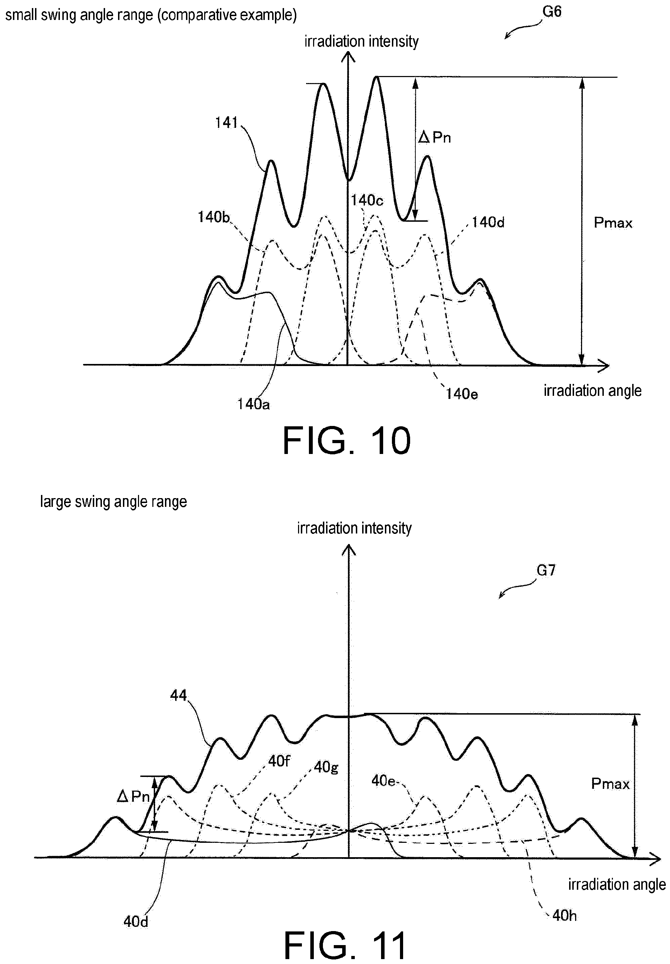

A graph G6 shown in FIG. 10 is a graph showing an intensity distribution of each scanning light scanned by the optical scanner 3 according to a comparative example and an intensity distribution of the irradiation light which is obtained in a manner that each scanning light overlaps. In the graph G6, the horizontal axis is the irradiation angle, and the vertical axis is the irradiation intensity.

An intensity distribution 140a of the graph G6 is an intensity distribution of the scanning light irradiated from the first light emission portion 10a (see FIG. 4). In addition, an intensity distribution 140b is an intensity distribution of the scanning light irradiated from the third light emission portion 10c (see FIG. 4). In addition, an intensity distribution 140c is an intensity distribution of the scanning light irradiated from the fourth light emission portion 10d (see FIG. 4). In addition, an intensity distribution 140d is an intensity distribution of the scanning light irradiated from the fifth light emission portion 10e (see FIG. 4). In addition, an intensity distribution 140e is an intensity distribution of the scanning light irradiated from the second light emission portion 10b (see FIG. 4).

In the comparative example shown in the graph G6, for example, the mirror portion 3a is swung in a manner that the angle range R (see FIG. 4) in which the mirror portion 3a is swung is 8.5 degrees. When the mirror portion 3a is swung in a manner that the angle range R in which the mirror portion 3a is swung is 8.5 degrees, as shown in the graph G6, each scanning light is scanned in a manner that the peaks are located to overlap each other. Therefore, the intensity distribution 141 of the irradiation light which is obtained in a manner that each scanning light overlaps has a large variation in the irradiation intensity. Moreover, in the embodiment, the variation in the irradiation intensity is defined by the following Equation (1).

$$\text{Variation in irradiation intensity} = \Delta Pn \,/\, Pmax \cdots (1)$$

Here, $\Delta Pn$ is the maximum value of the intensity difference between a peak and a valley which are adjacent in the intensity distribution. In addition, Pmax is the maximum irradiation intensity of the intensity distribution.

In the intensity distribution 141 of the irradiation light shown in FIG. 10, as a result of the calculation by the above Equation (1), the variation in the irradiation intensity is 0.80.

A graph G7 shown in FIG. 11 is a graph showing an intensity distribution of the scanning light scanned by the optical scanner 3 according to the embodiment and an intensity distribution 44 of the irradiation light which is obtained in a manner that each scanning light overlaps. Each intensity distribution shown in the graph G7 is an example of the intensity distribution when the mirror portion 3a is swung in a manner that the angle range R in which the mirror portion 3a swings is 32 degrees.

In the embodiment, the mirror portion 3a scans so as to form the intensity distribution in which all the first peaks 42 except the first peak 42a of the first light emission portion 10a are located in the first valley part 41a, and all the second peaks 43 except the second peak 43e of the scanning light of the second light emission portion 10b are located in the second valley part 41e. As a result of the calculation based on the above Equation (1), the variation in the irradiation intensity of the intensity distribution 44 of the irradiation light which is obtained in a manner that each scanning light overlaps is 0.31. That is, it is confirmed that the intensity distribution 44 of the irradiation light which is obtained in a manner that each scanning light overlaps has a smaller variation in the irradiation intensity than the intensity distribution 141 (see FIG. 10) of the irradiation light according to the comparative example.

(Formation of irradiation region and light-shielding region)

In the embodiment, the control portion 6 controls a region and light distribution of the light irradiated from the plurality of light emission portions 10. The control portion 6 serves as a so-called adaptive driving beam (ADB) system to control the region and the light distribution of the light irradiated from the plurality of light emission portions 10. Specifically, as shown in FIG. 2, the control portion 6 controls formation of a region Rs which shields the light and a region Ri which irradiates the light by switching between a turn-on state and a turn-off state of the light emission portion 10 among the plurality of light emission portions 10, which emits the light scanned in the region Rs which shields the light, based on a detection result acquired by the detection portion 4 and the swing angle θ (see FIG. 4) of the mirror portion 3a acquired by the swing angle acquisition portion 5.

The control portion 6 sets, according to the detection result acquired by the detection portion 4, a region where the moving body 110 (see FIG. 1) is detected in the region Ri which irradiates the light as the region Rs which shields the light.

Based on the swing angle θ of the mirror portion 3a, the control portion 6 sets the light emission portion 10 which irradiates the light scanned in the region Rs which shields the light to the turn-off state, and sets other light emission portions 10 to the turn-on state, thereby forming the region Ri which irradiates the light and the region Rs which shields the light.

Next, the processing in which the control portion 6 according to the embodiment forms the region Ri which irradiates the light and the region Rs which shields the light is described with reference to FIG. 12. Moreover, the processing in which the control portion 6 forms the region Ri which irradiates the light and the region Rs which shields the light is started by inputting an operation input of starting the light irradiation.

In Step S1, the control portion 6 acquires the detection result detected by the detection portion 4.

In Step S2, the control portion 6 determines whether or not a target for forming the region Rs which shields the light is located in the region Ri which irradiates the light. The target for forming the region Rs which shields the light is, for example, other moving body. If the other moving body is located in the region Ri which irradiates the light, the processing proceeds to Step S3. In addition, if no other moving body is located in the region Ri which irradiates the light, the processing proceeds to Step S4.

In Step S3, the control portion 6 sets the region Rs which shields the light in the region Ri which irradiates the light. Moreover, if the region Rs which shields the light has already been set, the processing of Step S3 is omitted. The processing proceeds to Step S5 thereafter.

In addition, in Step S4, the control portion 6 cancels the setting of the region Rs which shields the light. Moreover, if the region Rs which shields the light is not set, the processing of Step S4 is omitted. The processing proceeds to Step S5 thereafter.

In Step S5, the control portion 6 acquires the swing angle θ of the mirror portion 3a.

In Step S6, the control portion 6 determines whether or not the swing angle θ of the mirror portion 3a is an angle at which the light is scanned into the region Rs which shields the light. If the swing angle θ of the mirror portion 3a is the angle at which the light is scanned into the region Rs which shields the light, the processing proceeds to Step S7. If the swing angle θ of the mirror portion 3a is not the angle at which the light is scanned into the region Rs which shields the light, the processing proceeds to Step S8. Moreover, in the processing of Step S6, the determination of the light emission portion 10 located in the head is performed in the swing direction of the mirror portion 3a.

In Step S7, the control portion 6 sets the light emission portion 10 to the turn-off state. Moreover, if the light emission portion 10 has already been set to the turn-off state, the processing of Step S7 is omitted. The processing proceeds to Step S9 thereafter.

In addition, in Step S8, the control portion 6 sets the light emission portion 10 to the turn-on state. Moreover, if the light emission portions 10 has already been set to the turn-on state, the processing of Step S8 is omitted. The processing proceeds to Step S9 thereafter.

In Step S9, the control portion 6 determines whether or not states of all the light emission portions 10 have been determined. If the states of all the light emission portions 10 have not been determined, the processing proceeds to Step S6. If the states of all the light emission portions 10 have been determined, the processing is completed. That is, the processing of Steps S6 to S9 is repeated until the state of each light emission portion 10 is determined in the swing angle θ of the mirror portion 3a which is acquired in Step S5.

Moreover, the processing in which the control portion 6 forms the region Ri which irradiates the light and the region Rs which shields the light is continued until an operation input of completing the light irradiation is input. That is, the control portion 6 repeats the processing of Steps S1 to S9 until the operation input of completing the light irradiation is input.

(Effects of embodiment)

In the embodiment, effects as described below can be obtained.

In the embodiment, as described above, the light projection device 100 includes: the light source 1 having the plurality of light emission portions 10 arranged side by side in the predetermined direction; the projection lens 2 in which the light is irradiated from the plurality of light emission portions 10; the optical scanner 3 having the mirror portion 3a which scans the light passed through the projection lens 2 in the direction in which the plurality of light emission portions 10 is aligned, and the drive source 3b which swings the mirror portion 3a. The mirror portion 3a scans the scanning light, which is irradiated from each of the plurality of light emission portions 10 and scanned by the mirror portion 3a, so as to form the intensity distribution having the central valley part 41 and the peaks located on both sides of the valley part 41. The optical scanner 3 scans the light irradiated from the plurality of light emission portions 10 in a manner that at least the peak of the intensity distribution of the scanning light of other light emission portion 10 is located in the valley part 41 of the intensity distribution of the scanning light. Thereby, even when the difference in the intensity of the scanned light becomes larger between both end parts and the central part in the scanning region by scanning the light irradiated from the light source 1 by the mirror portion 3, because the peak of the intensity distribution of the scanning light of other light emission portion 10 is located in the valley part 41 of the intensity distribution of the scanning light, the difference in the intensity of the scanning light between the intensity of the light of the valley part 41 and the intensity of the light of the peak can be reduced. As a result, even when the light irradiated from the light source 1 is scanned by the mirror portion 3a, the variation in the intensity generated in the projected light can be suppressed.

In addition, in the embodiment, as described above, the optical scanner 3 adjusts the angle range R in which the mirror portion 3a swings when the light irradiated from the plurality of light emission portions 10 is scanned, in a manner that at least the peak of the intensity distribution of the scanning light of other light emission portion 10 is located in the valley part 41 of the intensity distribution of the scanning light. Thereby, by adjusting the angle range R in which the mirror portion 3a swings, the light can be scanned in a manner that the peak of the intensity distribution of other scanning light is located in the valley part 41 of the intensity distribution of the scanning light. As a result, the variation in the intensity generated in the projected light can be easily suppressed.

In addition, in the embodiment, as described above, the optical scanner 3 adjusts the angle range R in which the mirror portion 3a swings when the light irradiated from the plurality of light emission portions 10 is scanned, so as to form the intensity distribution in which the plurality of first peaks 42 is located in the first valley part 41a which is a valley part 41 of the intensity distribution of the scanning light of the first light emission portion 10a among the plurality of light emission portions 10, which is arranged at an end portion on one side, and the plurality of second peaks 43 is located in the second valley part 41e which is the valley part 41 of the intensity distribution of the scanning light of the second light emission portion 10b among the plurality of light emission portions 10, which is arranged at an end portion on the other side. Thereby, the intensity distribution is formed in which the plurality of first peaks 42 is located in the first valley part 41a and the plurality of second peaks 43 is located in the second valley part 41e, and thus the difference in the intensity of the scanning light between the peak and the valley part 41 can be further reduced as compared with the intensity distribution in which one first peak 42 is located in the first valley part 41a and one second peak 43 is located in the second valley part 41e. As a result, the variation in the intensity generated in the projected light can be further suppressed.

In addition, in the embodiment, as described above, the optical scanner 3 adjusts the angle range R in which the mirror portion 3a swings when the light irradiated from the plurality of light emission portions 10 is scanned, so as to form the intensity distribution in which the second peak 43 of the first light emission portion 10a is located closer to the second peak 43 side of the second light emission portion 10b than the first peak 42 of the second light emission portion 10b. Thereby, the light from the light emission portion 10 can be scanned so as to form the intensity distribution in which all the first peaks 42 are located in the first valley part 41a and all the second peaks 43 are located in the second valley part 41e. As a result, the difference in the intensity of the scanning light between the peak and the valley part 41 can be even further effectively reduced, and thus the variation in the intensity generated in the projected light can be even further effectively suppressed.

In addition, in the embodiment, as described above, the optical scanner 3 is configured in a manner that the scanning light is the light which has the intensity distribution having the valley part 41 and the peaks by adjusting the angle range R in which the mirror portion 3a swings without changing the light amount irradiated from the plurality of light emission portions 10 from the maximum light amount. Thereby, the decrease of the utilization efficiency of the light irradiated from each light emission portion 10 can be suppressed as compared with, for example, the configuration in which the light amount irradiated from the plurality of light emission portions 10 is adjusted in order to suppress the variation in the intensity distribution of the scanning light. As a result, the decrease of the utilization efficiency of the light irradiated from the plurality of light emission portions 10 can be suppressed, and the variation in the intensity of the projected light can be suppressed.

In addition, in the embodiment, as described above, the plurality of light emission portions 10 is arranged at substantially equal intervals. Thereby, the light irradiated from each emission point is also scanned at substantially equal intervals, and thus the light can be scanned in a manner that the plurality of peaks is located at substantially equal intervals in the valley part 41. As a result, the cancellation of the light intensity in the valley part 41 and the plurality of peaks occurs at substantially equal intervals, and thus the variation in the intensity of the projected light can be more easily suppressed.

In addition, in the embodiment, as described above, the mirror portion 3a is constituted by the metal member having the flat plate shape, and the drive source 3b generates a plate wave and swings the mirror portion 3a by the generated plate wave to reciprocate and vibrate around the axis line of the predetermined swing axis Ax. Thereby, because the mirror portion 3a is swung by the plate wave, the size of the mirror portion 3a can be increased as compared with, for example, a MEMS mirror. As a result, because the size of the mirror portion 3a can be increased, the irradiation range of the scanning light can be easily widened.

In addition, in the embodiment, as described above, the light projection device for moving body (the light projection device 100), which is mounted on the moving body 110 and irradiates the light to the front of the moving body 110, includes: the light source 1 having the plurality of light emission portions 10 arranged side by side in the predetermined direction; the projection lens 2 in which the light is irradiated from the plurality of light emission portions 10; the optical scanner 3 having the mirror portion 3a which scans the light passed through the projection lens 2 in the direction in which the plurality of light emission portions 10 is aligned, and the drive source 3b which swings the mirror portion 3a; the detection portion 4 detecting the region Rs which shields the light in the region Ri in which the light scanned by the mirror portion 3a is irradiated; the swing angle acquisition portion 5 which acquires the swing angle of the mirror portion 3a; and the control portion 6 which controls the formation of the region Rs which shields the light and the region Ri which irradiates the light by switching between the turn-on state and the turn-off state of the light emission portion 10 among the plurality of light emission portions 10, which emits the light scanned in the region Rs which shields the light, based on the detection result acquired by the detection portion 4 and the swing angle of the mirror portion 3a acquired by the swing angle acquisition portion 5. The mirror portion 3a scans the scanning light, which is irradiated from each of the plurality of light emission portions 10 and scanned by the mirror portion 3a, so as to form the intensity distribution having the central valley part 41 and the peaks located on both sides of the a 41. The optical scanner 3 scans the light irradiated from the plurality of light emission portions 10 in a manner that at least the peak of the intensity distribution of the scanning light of other light emission portion 10 is located in the valley part 41 of the intensity distribution of the scanning light. Thereby, similar to the light projection device 100 in the above embodiment, the light projection device for moving body can be provided which can suppress the variation in the irradiation intensity generated in the projected light and scan the irradiation light to the desired region even when the light irradiated from the plurality of light emission portions 10 is scanned by the mirror portion 3a.

In addition, in the embodiment, as described above, the optical scanner 3 adjusts the angle range R in which the mirror portion 3a swings when the light irradiated from the plurality of light emission portions 10 is scanned, in a manner that at least the peak of the intensity distribution of the scanning light of other light emission portion 10 is located in the valley part 41 of the intensity distribution of the scanning light. Thereby, similar to the light projection device 100 in the above embodiment, the variation in the intensity generated in the projected light can also be easily suppressed in the light projection device for moving body.


[Variation example]


Moreover, it should be considered that the embodiment disclosed this time is exemplary in all respects and is not restrictive. The scope of the disclosure is indicated by claims rather than the description of the aforementioned embodiment, and meanings equivalent to the claims and all modifications (variation examples) within the scope of the claims are included.

For example, in the embodiment, the example of the configuration is shown, in which the mirror portion 3a is swung so as to form the intensity distribution in which all the first peaks 42 except the first peak 42a of the scanning light irradiated from the first light emission portion 10a are located in the first valley part 41a, and all the second peaks 43 except the second peak 43 e of the scanning light irradiated from the second light emission portion 10b are located in the second valley part 41e, but the disclosure is not limited thereto.

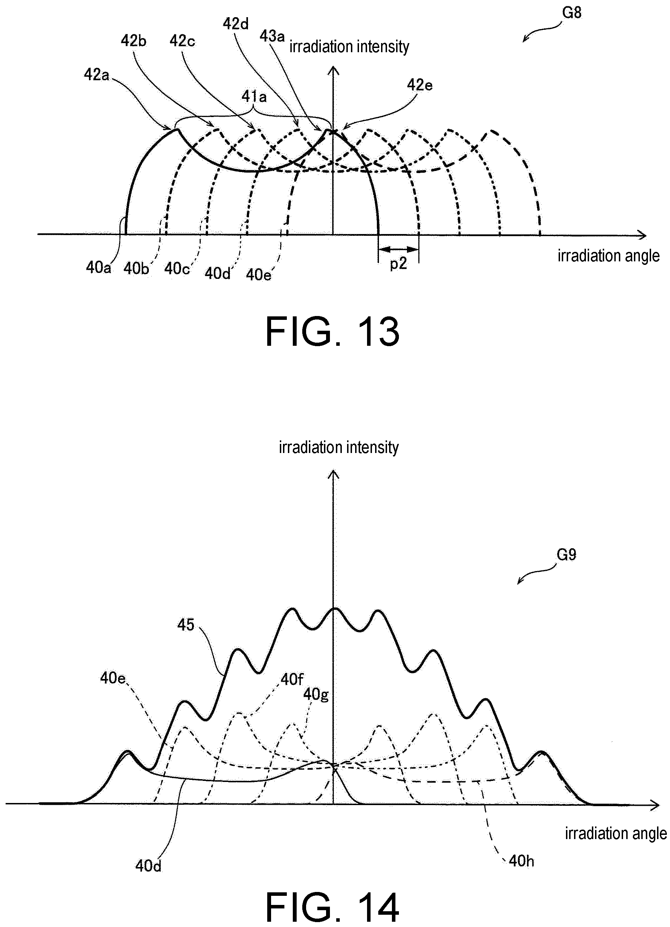

In the first variation example, a graph G8 in FIG. 13 is an intensity distribution when the mirror portion 3a is swung in a manner that the swing angle of the mirror portion 3a is 24 degrees. Moreover, the graph G8 is a graph in which the horizontal axis is the irradiation angle and the vertical axis is the irradiation intensity.

In the first variation example, the optical scanner 3 may adjust the angle range R in which the mirror portion 3a swings when the light irradiated from the plurality of light emission portions 10 is scanned, so as to form an intensity distribution in which all the first peaks 42 except the first peak 42 of the first light emission portion 10a and the first peak 42 of the second light emission portion 10b are located in the first valley part 41a, and all the second peaks 43 except the second peak 43 of the first light emission portion 10a and the second peak 43 of the second light emission portion 10b are located in the second valley part 41e.

In addition, in the first variation example, as shown in a graph G9 in FIG. 14, an intensity distribution 45 of the scanning light according to the first variation example has a higher irradiation intensity at the central part than the intensity distribution 44 of the scanning light according to the above-described embodiment. Moreover, the graph G9 is a graph in which the horizontal axis is the irradiation angle and the vertical axis is the irradiation intensity.

In the intensity distribution 45 of the scanning light according to the first variation example, the variation in the irradiation intensity which is calculated based on the above Equation (1) is 0.36. That is, the variation in the irradiation intensity according to the first variation example is larger than that of the intensity distribution of the scanning light 44 according to the above embodiment. That is, there is a trade-off relationship between the irradiation intensity at the central part and the variation in the irradiation intensity of the scanning light.

In the first variation example, the number of the first peaks 42 located in the first valley part 41a and the number of the second peaks 43 located in the second valley part 41e can be increased by the above-described configuration. As a result, the difference in the intensity of the scanning light between the peak and the valley part 41 can be reduced even further, and thus the variation in the intensity generated in the projected light can be suppressed even further.

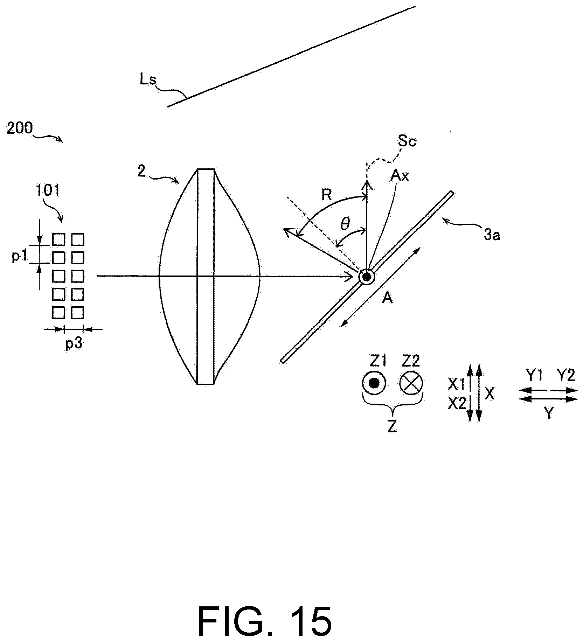

In addition, in the above embodiment, the example of the configuration is shown, in which the plurality of light emission portions 10 is arranged side by side in the scanning direction of the mirror portion 3a, but the disclosure is not limited thereto. For example, as in a second variation example shown in FIG. 15, the plurality of light emission portions 10 may be arranged side by side in the scanning direction of the mirror portion 3a and a direction orthogonal to the scanning direction. As shown in FIG. 15, the plurality of light emission portions 10 is arranged at substantially equal intervals in the direction orthogonal to the scanning direction. In the example shown in FIG. 15, the plurality of light emission portions 10 is arranged at substantially equal intervals of a pitch p3.

In the second variation example, because the light emission portions 10 are arranged in the scanning direction of the mirror portion 3a and the direction orthogonal to the scanning direction by the above-described configuration, the number of the light emission portions 10 included in the light source 1 can be increased, and thus the light amount of the scanning light can be easily increased.

In addition, in the above embodiment, the example of the configuration is shown, in which the light projection device 100 includes the detection portion 4, the swing angle acquisition portion 5, and the control portion 6, but the disclosure is not limited thereto. For example, the light projection device 100 may not include the detection portion 4, the swing angle acquisition portion 5, and the control portion 6.

In addition, in the above embodiment, the example of the configuration is shown, in which the plurality of light emission portions 10 irradiates the light without changing the light amount of the irradiated light from the maximum light amount, but the disclosure is not limited thereto. For example, the plurality of light emission portions 10 may change the light amount of the irradiated light from the maximum light amount. That is, the plurality of light emission portions 10 may be configured to emit the light with the light amount smaller than the maximum light amount. However, when the light amount of the light irradiated from the plurality of light emission portions 10 is set to be smaller than the maximum light amount, the utilization efficiency of the light emission portion 10 is lowered, and thus the plurality of light emission portions 10 may be configured to irradiate the light without changing the light amount of the irradiated light from the maximum light amount.

In addition, in the above embodiment, the example of the configuration is shown, in which the plurality of light emission portions 10 is arranged at substantially equal intervals, but the disclosure is not limited thereto. For example, the plurality of light emission portions 10 may be arranged at non-equal intervals.

In addition, in the above embodiment, the example of the configuration is shown, in which the light source 1 has the five light emission portions 10 including the first light emission portion 10a to the fifth light emission portion 10e as the plurality of light emission portions 10, but the disclosure is not limited thereto. For example, the light source 1 may have more than five light emission portions 10, or may have less than five light emission portions 10 as the plurality of light emission portions 10. The appropriate number of the plurality of light emission portions 10 may be selected according to the size of the region Ri in which the light is irradiated and the swing angle of the mirror portion 3a.

In addition, in the above embodiment, the example of the configuration is shown, in which the substrate 30 has the U-shape, but the disclosure is not limited thereto. For example, the substrate 30 may have a V-shape or a Y-shape. The shape of the substrate 30 may be any shape as long as one side (A1 direction side) of the pair of beam portions 30a is supported by the support portion 30b.

In addition, in the above embodiment, the example of the configuration is shown, in which the light projection device 100 is mounted on the automobile used as the moving body 110, but the disclosure is not limited thereto. For example, the light projection device 100 may be mounted on a moving body other than the automobile, which is used as the moving body. For example, the light projection device 100 may be mounted on a motorcycle (an auto bicycle) or the like used as the moving body.

In addition, in the above embodiment, the example of the configuration is shown, in which the control portion 6 forms the region Ri which irradiates the light and the region Rs which shields the light, but the disclosure is not limited thereto. The control portion 6 may not form the region Ri which irradiates the light and the region Rs which shields the light.

In addition, in the embodiment, the example of the configuration in which the light projection device 100 is mounted on the moving body 110 is shown, but the disclosure is not limited thereto. The light projection device 100 may not be mounted on the moving body 110.

[Reference Sign List]

1: light source
2: projection lens
3: optical scanner
3a: mirror portion
3b: drive source
4: detection portion
5: swing angle acquisition portion
6: control portion
10: light emission portion
10a: first light emission portion
10b: second light emission portion
40d, 40e, 40f, 40g, 40h:
41: valley part
41a: first valley part
41e: second valley part
42, 42a, 42b, 42c, 42d, 42e: first peak
43, 43a, 43b, 43c, 43d, 43e: second peak
100: light projection device
110: moving body
Ls: light distribution observation surface
R: angle range in which the mirror portion swings
Ri: region in which the light is irradiated
Rs: region which shields the light
θ: swing angle

**Claims**

1. A light projection device (100), **characterized in that** the light projection device (100) comprises:

    a light source (1) having a plurality of light emission portions (10) arranged side by side in a predetermined direction;
    a projection lens (2) in which light is irradiated from the plurality of light emission portions (10); and
    an optical scanner (3) having a mirror portion (3a) which scans light passed through the projection lens (2) in a direction that the plurality of light emission portions (10) is aligned, and a drive source (3b) which swings the mirror portion,
    wherein the mirror portion (3a) scans a scanning light, which is irradiated from each of the plurality of light emission portions (10) and scanned by the mirror portion (3a), so as to form an intensity distribution (44) having a central valley part (41) and peaks (42, 43) located on two sides of the valley part (41), and
    the optical scanner (3) scans light irradiated from the plurality of light emission portions (10) in a manner that at least the peak (42a) of the intensity distribution of the scanning light of other light emission portion is located in the valley part (41) of the intensity distribution of the scanning light.

2. The light projection device (100) according to claim 1, **characterized in that** the optical scanner (3) adjusts an angle range (R) in which the mirror portion swings when the light irradiated from the plurality of light emission portions (10) is scanned, in a manner that at least the peak (42a) of the intensity distribution (44) of the scanning light of other light emission portion is located in the valley part (41) of the intensity distribution of the scanning light.

3. The light projection device (100) according to claim 2, **characterized in that** the peaks comprise a first peak (42) located on one side and a second peak (43) located on the other side, and
    the optical scanner (3) adjusts the angle range (R) in which the mirror portion swings when the light irradiated from the plurality of light emission portions (10) is scanned, so as to form the intensity distribution in which a plurality of the first peaks (42a~42e) is located in a first valley part (41a) which is a valley part of the intensity distribution of the scanning light of a first light emission portion (10a) among the plurality of light emission portions (10), which is arranged at an end portion on one side, and a plurality of the second peaks (43a~43e) is located in a second valley part (41b) which is a valley part of the intensity distribution of the scanning light of a second light emission portion (10b) among the plurality of light emission portions (10), which is arranged at an end portion on the other side.

4. The light projection device (100) according to claim 3, **characterized in that** the optical scanner (3) adjusts the angle range (R) in which the mirror portion swings when the light irradiated from the plurality of light emission portions (10) is scanned, so as to form the intensity distribution in which all the first peaks (42c~42e) except the first peak (42a) of the first light emission portion (10a) and the first peak (42b) of the second light emission portion (10b) are located in the first valley part (41a), and all the second peaks (43c~43e) except the second peak (43a) of the first light emission portion (10a) and the second peak (43b) of the second light emission portion (10b) are located in the second valley part.

5. The light projection device (100) according to claim 4, **characterized in that** the optical scanner (3) adjusts the angle range (R) in which the mirror portion swings when the light irradiated from the plurality of light emission portions (10) is scanned, so as to form the intensity distribution in which the second peak (42a) of the first light emission portion (10a) is located closer to the second peak (43b) side of the second light emission portion (10b) than the first peak (42b) of the second light emission portion (10b).

6. The light projection device (100) according to any one of claims 1 to 5, **characterized in that** the optical scanner (3) is configured that the scanning light is light which has the intensity distribution having the valley part (41) and the peaks (42, 43) by adjusting the angle range (R) in which the mirror portion swings without changing a light amount irradiated from the plurality of light emission portions (10) from a maximum light amount.

7. The light projection device (100) according to any one of claims 1 to 6, **characterized in that** the plurality of light emission portions (10) is arranged at substantially equal intervals.

8. The light projection device (100) according to any one of claims 1 to 7, **characterized in that** the plurality of light emission portions (10) is arranged side by side in a scanning direction of the mirror portion (3a) and a direction orthogonal to the scanning direction.

9. The light projection device (100) according to any one of claims 1 to 8, **characterized in that** the mirror portion (3a) is configured by a metal member having a flat plate shape, and
the drive source (3b) generates a plate wave and swings the mirror portion (3a) by the generated plate wave to reciprocate and vibrate around an axis line of a predetermined swing axis.

10. A light projection device (100) for a moving body (110) which is mounted on the moving body (110) and irradiates light to a front of the moving body (100), **characterized in that** the light projection device (100) comprises:

a light source (1) having a plurality of light emission portions (10)arranged side by side in a predetermined direction;
a projection lens (2) in which light is irradiated from the plurality of light emission portions (10);
an optical scanner (3) having a mirror portion (3a) which scans light passed through the projection lens (2) in a direction in which the plurality of light emission portions (10) is aligned, and a drive source (3b) which swings the mirror portion (3a);
a detection portion (4) detecting a region (Rs) which shields light in a region (Ri) in which the light scanned by the mirror portion is irradiated;
a swing angle acquisition portion (5) which acquires a swing angle ($\theta$) of the mirror portion (3a); and
a control portion (6) which controls formation of the region (Rs) which shields light and the region (Ri) which irradiates light by switching between a turn-on state and a turn-off state of a light emission portion among the plurality of light emission portions (10), which emits light scanned in the region (Rs) which shields light, based on a detection result acquired by the detection portion (4) and the swing angle ($\theta$) of the mirror portion (3a) acquired by the swing angle acquisition portion (5), wherein
the mirror portion (3a) scans a scanning light, which is irradiated from each of the plurality of light emission portions (10) and scanned by the mirror portion (3a), so as to form an intensity distribution having a central valley part (41) and peaks (42, 43) located on two sides of the valley part (41), and
the optical scanner (3) scans light irradiated from the plurality of light emission portions (10) in a manner that at least the peak (42) of the intensity distribution of scanning light of other light emission portion is located in the valley part (41) of the intensity distribution of the scanning light.

11. The light projection device (100) for moving body (110) according to claim 10, **characterized in that** the optical scanner (3) adjusts an angle range (R) in which the mirror portion (3a) swings when the light irradiated from the plurality of light emission portions (10) is scanned, in a manner that at least the peak (42) of the intensity distribution of the scanning light of other light emission portion is located in the valley part (41) of the intensity distribution of the scanning light.

FIG. 1

Rs

Ri

100

light projection device

10b
10d
10e  light
10c
10a

1    2

3
optical scanner

mirror portion

vibration
3a    3b

drive source

detection portion

4

swing angle
acquisition portion

5

control portion

6

Z1  Z2
⊙   ⊗      X1
           X2  X
      Z

Y1  Y2

Y

# FIG. 2

## FIG. 3

## FIG. 4

when mirror portion is stopped

irradiation intensity

G1

40a

# FIG. 5

when mirror portion swings (small swing angle range)

irradiation intensity

42    41    G2

43

40b

irradiation angle

# FIG. 6

when mirror portion swings (large swing angle range)

irradiation intensity

G3

41

42

43

40c

irradiation angle

# FIG. 7

42d

42a    42b    42c          irradiation intensity                    G4

41a    42e    D         43a   43b   43c   43d   43e

40d  40e  40f  40g  40h    41b  41c  41d  41e                    p2         irradiation angle

# FIG. 8

when mirror portion is stopped

irradiation intensity                    G5

40f

40e

40g

40d                                                               40h

irradiation angle

# FIG. 9

small swing angle range (comparative example)

FIG. 10

large swing angle range

FIG. 11

start

acquire detection
result                  S1

Is other moving
body located in region which    No
irradiates light?                        S2

Yes        S3                              S4

set region which            cancel setting of region which
shields light                     shields light

acquire swing angle of
mirror portion          S5

Is swing angle
of mirror an angle at which light    No
is scanned into region which            S6
shields light?

Yes        S7                              S8

set light emission portion to      set light emission portion to
turn-off state                        turn-on state

Have states of
No      all light emission portions been
determined?                     S9

Yes

end

FIG. 12

FIG. 13

FIG. 14

# FIG. 15

Europäisches
Patentamt
European
Patent Office
Office européen
des brevets

# EUROPEAN SEARCH REPORT

Application Number

EP 21 16 9344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 11 2014 003428 T5 (DENSO CORP [JP]) 28 April 2016 (2016-04-28) | 1,2,6-11 | INV. G02B26/08 G02B26/10 |
| A | * abstract *<br>* Paragraphs [0002], [0008], [0040]-[0041], [0042]-[0045], [0046]-[0048], [0051]-[0052], [0058]-[0061], [0075]-[0079] *<br>* figures 1-20 * | 3-5 | |
| X | US 2015/042542 A1 (FUJIKAWA TAKAYUKI [JP] ET AL) 12 February 2015 (2015-02-12) | 1,10 | |
| A | * abstract *<br>* Paragraphs [0002], [0007]-[0008], [0045]-[0046], [0048]-[0057], [0060], [0064]-[0067], [0072]-[0074], [0084]-[0088] *<br>* figures 1-30 * | 3-5 | |
| X | EP 3 418 057 A1 (FUNAI ELECTRIC CO [JP]) 26 December 2018 (2018-12-26) | 1,10 | |
| A | * abstract *<br>* Paragraphs [0001], [0007]-[0009], [0011]-[0016], [0019]-[0020],[0026]-[0028], [0031]-[0033], [0035]-[0036], [0067]-[0069] *<br>* figures 1-16 * | 3-5 | TECHNICAL FIELDS SEARCHED (IPC)<br><br>G02B |

The present search report has been drawn up for all claims

| Place of search | Date of completion of the search | Examiner |
|---|---|---|
| Munich | 15 September 2021 | Kienle, Philipp |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 21 16 9344

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2021

| Patent document cited in search report | Publication date | Patent family member(s) | | Publication date |
|---|---|---|---|---|
| DE 112014003428 T5 | 28-04-2016 | CN | 105408804 A | 16-03-2016 |
| | | DE | 112014003428 T5 | 28-04-2016 |
| | | JP | 6213010 B2 | 18-10-2017 |
| | | JP | 2015025874 A | 05-02-2015 |
| | | KR | 20160019965 A | 22-02-2016 |
| | | US | 2016170099 A1 | 16-06-2016 |
| | | WO | 2015011913 A1 | 29-01-2015 |
| US 2015042542 A1 | 12-02-2015 | CN | 104345458 A | 11-02-2015 |
| | | DE | 102014215453 A1 | 12-02-2015 |
| | | JP | 6225550 B2 | 08-11-2017 |
| | | JP | 2015034877 A | 19-02-2015 |
| | | KR | 20150018445 A | 23-02-2015 |
| | | US | 2015042542 A1 | 12-02-2015 |
| EP 3418057 A1 | 26-12-2018 | CN | 109143573 A | 04-01-2019 |
| | | EP | 3418057 A1 | 26-12-2018 |
| | | EP | 3845388 A1 | 07-07-2021 |
| | | JP | 2019003120 A | 10-01-2019 |
| | | US | 2018364475 A1 | 20-12-2018 |
| | | US | 2021080713 A1 | 18-03-2021 |

EPO FORM P0459

For more details about this annex : see Official Journal of the European Patent Office, No. 12/82

**EP 3 904 943 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019167011 A